# EUROPEAN PATENT APPLICATION

(11) **EP 4 235 531 A1**
(43) Date of publication of application: **30.08.2023**
(21) Application number: 21882503.2
(22) Date of filing: 22.09.2021
(51) Int. Cl.: G06Q 10/02, G06Q 10/08, G06Q 50/30

(54) **CHARGING RESERVATION SYSTEM**

(30) Priority: 23.10.2020 JP 2020178201
(71) Applicant: Yazaki Corporation, Minato-ku Tokyo 108-8333 (JP)
(72) Inventor: KOGO Kosuke, Shimada-shi, Shizuoka 427-8555 (JP)
(74) Representative: Grünecker Patent- und Rechtsanwälte PartG mbB
(86) International application number: PCT/JP2021/034913
(87) International publication number: WO 2022/085362

(57) **Abstract**

An operator (9) establishes an operation plan of an electric vehicle (7) based on information including a quantity of cargoes, a loading place, an unloading place, a loading time, and an unloading time obtained from a client (10), and inputs the operation plan to a terminal (3). The operation plan indicates work contents (loading, unloading, driving, and rest), a work place, and a work time of a driver who drives the electric vehicle (7). The server (4) acquires the operation plan from the terminal (3). The server (4) manages management information including a location and a reservation status of a charging device (2) for the electric vehicle (7). Based on the management information, the server (4) makes a time period reservation of the charging device (2) that is located at the work place set in the operation plan or on a travel route from the work place to a next work place.

## Description

### TECHNICAL FIELD

The present invention relates to a charging reservation system.

### BACKGROUND ART

In the related art, an information management device capable of reserving a charging device for an electric vehicle has been proposed (see Patent Literature 1). When the information management device disclosed in Patent Literature 1 receives a charging request condition (location, time period) transmitted from a terminal of another person who wants a charging service, the information management device searches for a charging device that satisfies the request condition and makes a time period reservation.

In addition, as a technique for providing information on the above-described charging device, Patent Literatures 2 to 4 are cited.

### CITATION LIST

### PATENT LITERATURE

Patent Literature 1: JP2011-107929A
Patent Literature 2: JP2002-354609A
Patent Literature 3: JP2012-182879A
Patent Literature 4: JP2018-170823A

### SUMMARY OF INVENTION

### TECHNICAL PROBLEM

The above-described device in the related art is a device that provides information on a charging device to a general vehicle. For this reason, it may be difficult for a commercial vehicle to use the device in the related art while operating according to an operation plan.

The present invention has been made in view of the above circumstances, and an object thereof is to provide a charging reservation system with which a commercial vehicle can be charged while operating according to an operation plan.

### SOLUTION TO PROBLEM

In order to achieve the above object, a charging reservation system according to the present invention is characterized by the following [1] to [7].
[1] A charging reservation system including:
   an operation plan acquisition unit that acquires an operation plan indicating a work place and a work time of a driver who drives an electric vehicle;
   a charging device management unit that manages management information including a location of a charging device for the electric vehicle and a reservation status of the charging device; and
   a reservation unit that makes a time period reservation of the charging device that is located at the work place set in the operation plan or on a travel route from the work place to a next work place, based on the management information.
[2] The charging reservation system according to [1], in which
   the reservation unit reserves the charging device located at the work place within the work time at the work place, or reserves the charging device located on the travel route for a time period in a period from the work time at the work place to the work time at the next work place.
[3] The charging reservation system according to [1] or [2], further including:
   an operation plan correction unit that adds charging at the charging device reserved by the reservation unit to the operation plan.
[4] The charging reservation system according to any one of [1] to [3], further including:
   an information acquisition unit that acquires any one of road information and weather information, in which
   the reservation unit reserves the charging device based on information acquired by the information acquisition unit.
[5] The charging reservation system according to any one of [1] to [4], further including:
   a remaining battery level acquisition unit that acquires a remaining battery level of the electric vehicle, in which
   the reservation unit reserves the charging device based on the remaining battery level.
[6] The charging reservation system according to any one of [1] to [5], further including:
   a position acquisition unit that acquires position information of the electric vehicle, in which
   the reservation unit makes a time period reservation of the charging device located on the travel route to the next work place when it is determined based on the position information of the electric vehicle that an arrival time at the next work place is earlier than the work time at the next work place.
[7] The charging reservation system according to any one of [1] to [6], further including:
   an availability calculation unit that calculates an availability of the charging device based on the management information managed by the charging device management unit; and
   a presentation unit that presents the availability calculated by the availability calculation unit.

According to the charging reservation system having the configuration of [1], the reservation unit makes the time period reservation of the charging device for a time period that is located at the work place set in the operation plan or on the travel route from the work place to the next work place, based on the management information. Accordingly, the driver can perform charging while operating according to the operation plan.

According to the charging reservation system having the configuration of [2], the reservation unit reserves the charging device located at the work place within the work time at the work place, or reserves the charging device located on the travel route for a time period in a period from the work time at the work place to the work time at the next work place. Accordingly, the driver can operate in accordance with the operation plan with higher accuracy.

According to the charging reservation system having the configuration of [3], the operation plan correction unit adds the charging at the charging device reserved by the reservation unit to the operation plan. Accordingly, the driver can perform charging in accordance with the operation plan.

According to the charging reservation system having the configuration of [4], the reservation unit reserves the charging device for a time period corresponding to any one of the road information and the weather information acquired by the information acquisition unit. Accordingly, the driver can operate in accordance with the operation plan with higher accuracy.

According to the charging reservation system having the configuration of [5], the reservation unit reserves the charging device based on the remaining battery level. Accordingly, charging can be performed before a battery residual is exhausted.

According to the charging reservation system having the configuration of [6], when it is determined based on the position information of the electric vehicle that the arrival time at the next work place is earlier than the work time at the next work place, the reservation unit makes a time period reservation of the charging device located on the travel route to the next work place. Accordingly, a waiting time before heading to the next work place can be allocated as a charging time.

According to the charging reservation system having the configuration of [7], it is possible to present the availability of the charging device. Accordingly, it is possible to find a possibility of new installation of the charging device at or around a base of the charging device, and it is possible to conduct a discussion about the installation of the charging device in accordance with actual demands.

### ADVANTAGEOUS EFFECTS OF INVENTION

According to the present invention, it is possible to provide a charging reservation system with which a commercial vehicle can be charged while operating according to an operation plan.

The present invention is briefly described as above. Further, details of the present invention will be further clarified by reading through a mode for carrying out the invention described below (hereinafter referred to as an "embodiment") with reference to the accompanying drawings.

### BRIEF DESCRIPTION OF DRAWINGS

Fig. 1 is a configuration diagram illustrating an embodiment of a charging reservation system of the present invention.
Fig. 2 is a diagram illustrating an example of an operation plan input by a terminal illustrated in Fig. 1.
Fig. 3 is a configuration diagram of a server illustrated in Fig. 1.
Fig. 4 is a configuration diagram of an in-vehicle device illustrated in Fig. 1.
Fig. 5 is a flowchart illustrating a processing procedure of the server and the in-vehicle device illustrated in Fig. 1.
Fig. 6 is an illustrative diagram for illustrating operations of the charging reservation system illustrated in Fig. 1.
Fig. 7 is a diagram illustrating an example of a corrected operation plan.

### DESCRIPTION OF EMBODIMENTS

A specific embodiment of the present invention will be described below with reference to the drawings.

A charging reservation system 1 of the present embodiment is a system that reserves a charging device 2 for a time period so that an electric vehicle 7 used as a commercial vehicle can operate according to an operation plan thereof.

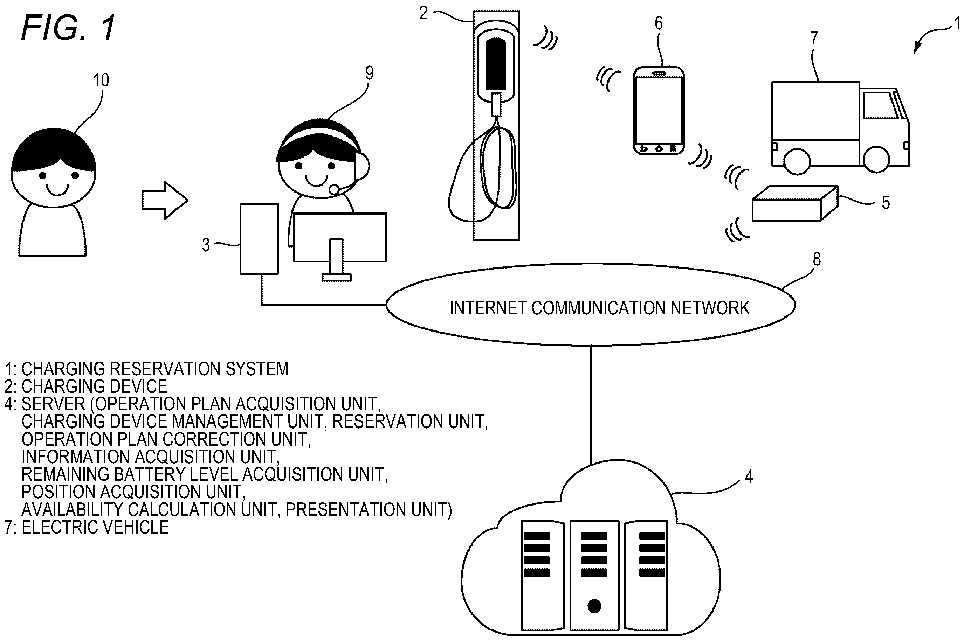

As illustrated in Fig. 1, the charging reservation system 1 includes a plurality of charging devices 2, a terminal 3 for inputting an operation plan, a server 4 that makes a time period reservation of the charging device 2 based on the operation plan, an in-vehicle device 5 mounted on the electric vehicle 7 that operates in accordance with the operation plan, and a communication terminal 6 that can be carried in a portable manner by a driver who drives the electric vehicle 7.

In the present embodiment, the terminal 3, the in-vehicle device 5, and the server 4 are configured to be able to communicate with each other via an Internet communication network 8. The in-vehicle device 5 and the communication terminal 6 are configured to be able to wirelessly communicate with each other using, for example, Bluetooth (BT (registered trademark)) communication, which is one of wireless communication standards that do not require a connection fee. Similarly, the communication terminal 6 and the charging device 2 are configured to be able to wirelessly communicate with each other by using, for example, BT communication, which is one of wireless communication standards that do not require a connection fee.

The charging device 2 is installed mainly at a berth of a factory serving as a loading place of cargo or a berth of a warehouse serving as an unloading place of cargo, or a site other than the berth of the factory or the warehouse. In addition, the charging device 2 may be installed in a charging station or the like. The charging device 2 can perform charging when an authentication key is received through the BT communication.

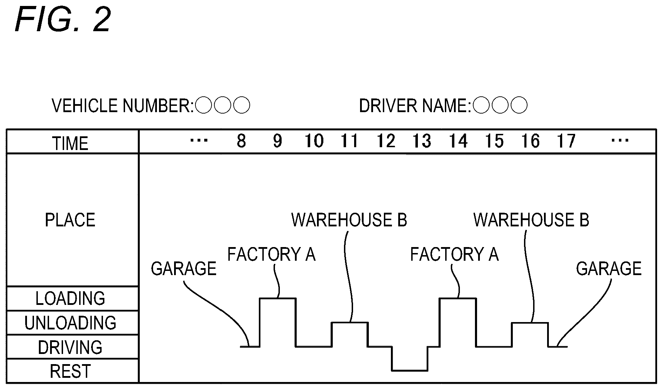

As illustrated in Fig. 1, the terminal 3 is implemented by, for example, a personal computer (PC), and is operated by an operator 9 of a transportation company. The operator 9 of the transportation company acquires, from a client 10, cargo information including a quantity of cargoes, a loading place, an unloading place, a loading date and time, and an unloading date and time from a telephone call, a mail, an application, or the like, and inputs an operation plan of each electric vehicle 7 to the terminal 3 based on the cargo information. As illustrated in Fig. 2, the operation plan indicates work content (loading, unloading, driving, and rest), a work place, and a work time of a driver who drives the electric vehicle 7. The terminal 3 transmits the input operation plan to the server 4 via the Internet communication network 8.

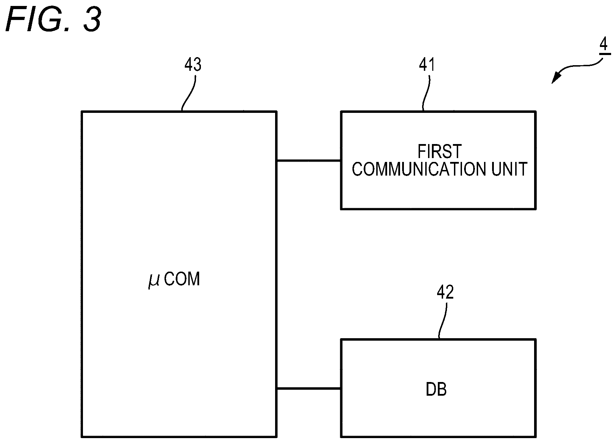

As illustrated in Fig. 3, the server 4 includes a first communication unit 41, a database (hereinafter, abbreviated as DB) 42, and a µCOM 43. The first communication unit 41 is a communication unit for connecting to the Internet communication network 8. The DB 42 stores a registered authentication key of the charging device 2, and management information such as registration information (installation location and the like) and a reservation status of the charging device 2. The µCOM 43 includes, for example, a central processing unit (CPU) that operates in accordance with a program stored in a memory such as a random access memory (RAM) or a read only memory (ROM), and controls the entire server 4. The µCOM 43 searches for and reserves the charging device 2 in accordance with the operation plan input from the terminal 3. Further, the µCOM 43 transmits an authentication key of the reserved charging device 2 to the in-vehicle device 5 so that the reserved charging device 2 can be used.

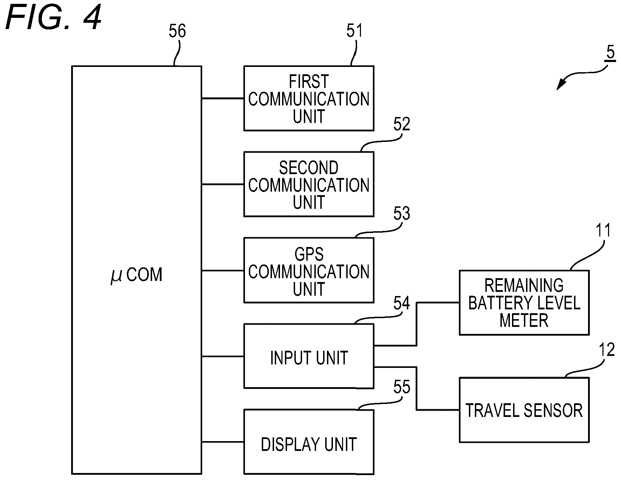

As illustrated in Fig. 4, the in-vehicle device 5 includes a first communication unit 51, a second communication unit 52, a GPS communication unit 53, an input unit 54, a display unit 55, and a µCOM 56. The first communication unit 51 is a communication unit for connecting to the Internet communication network 8. The second communication unit 52 is a communication unit for performing BT communication with the communication terminal 6. The GPS communication unit 53 receives radio waves transmitted from a plurality of global positioning system (GPS) satellites as is well known to obtain a current position, and outputs the current position to the µCOM 56 to be described later.

The input unit 54 is connected to a remaining battery level meter 11 and a travel sensor 12, and receives remaining battery level information and travel distance information. The display unit 55 displays a next work place, work content and the like for the driver according to the operation plan. The µCOM 56 includes, for example, a CPU that operates in accordance with a program stored in a memory such as a RAM or a ROM, and controls the entire in-vehicle device 5. The µCOM 56 communicates with the server 4 to receive the operation plan and receive the authentication key of the reserved charging device 2.

The communication terminal 6 is implemented by a tablet, a smartphone, or the like. The communication terminal 6 is provided so as to be capable of BT communication with the in-vehicle device 5, and receives the authentication key of the reserved charging device 2 from the in-vehicle device 5. The communication terminal 6 is provided so as to be capable of BT communication with the charging device 2, and transmits the authentication key to the charging device 2. In the present embodiment, an example in which the authentication key is transmitted to the charging device 2 by using the communication terminal 6 will be described, and the present invention is not limited thereto. The communication terminal 6 is not essential, and the authentication key may be directly transmitted from the in-vehicle device 5 to the charging device 2.

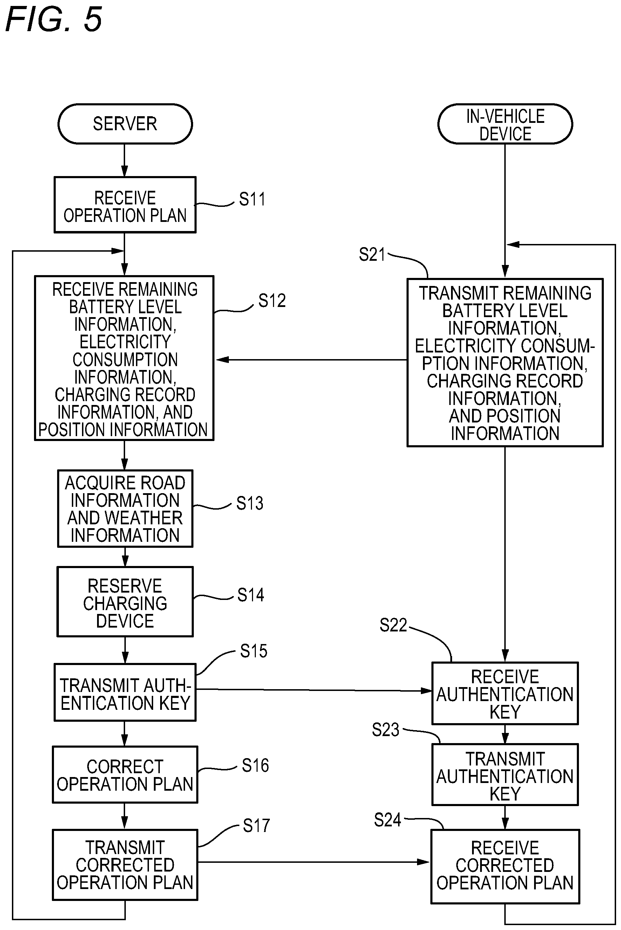

Next, operations of the charging reservation system 1 having the above-described configuration will be described with reference to Fig. 5. First, the operator 9 of the transportation company establishes an operation plan according to cargo information from the client 10 and inputs the operation plan to the terminal 3. When the operation plan is input, the terminal 3 transmits the input operation plan to the server 4. The µCOM 56 of the server 4 (hereinafter, simply referred to as "server 4") functions as an operation plan acquisition unit, and receives and acquires the operation plan from the terminal 3 (S11).

When the operation is started, the in-vehicle device 5 periodically transmits the remaining battery level information, electricity consumption information, charging record information, and position information to the server 4. The remaining battery level information is information input from the remaining battery level meter 11 that measures a remaining battery level of the electric vehicle 7. The electricity consumption information is information indicating battery consumption per unit distance travel that is calculated by the in-vehicle device 5 based on the remaining battery level input from the remaining battery level meter 11 and travel distance information input from the travel sensor 12. In the present embodiment, the in-vehicle device 5 sequentially calculates the electricity consumption information from a previous charging to a current charging. The charging record information is information indicating a date and time of the previous charging. The position information is information input from the GPS communication unit 53.

The server 4 functions as a remaining battery level acquisition unit and a position acquisition unit, and receives and acquires the remaining battery level information, the electricity consumption information, the charging record information, and the position information described above from the in-vehicle device 5 (S12). Next, the server 4 functions as an information acquisition unit, and acquires road information such as a congestion situation or an accident of a road and weather information via the Internet communication network 8 (S13).

Next, the server 4 functions as a reservation unit, and makes a time period reservation of the charging device 2 which is located at a work place set in the operation plan or on a travel route from a work place to a next work place, based on the acquired operation plan, remaining battery level information, electricity consumption information, charging record information, position information, road information, and/or weather information (S14).

S14 will be described in detail. The server 4 functions as a charging device management unit, and stores and manages the management information including the location and reservation information of the charging device 2 registered in the DB 42.

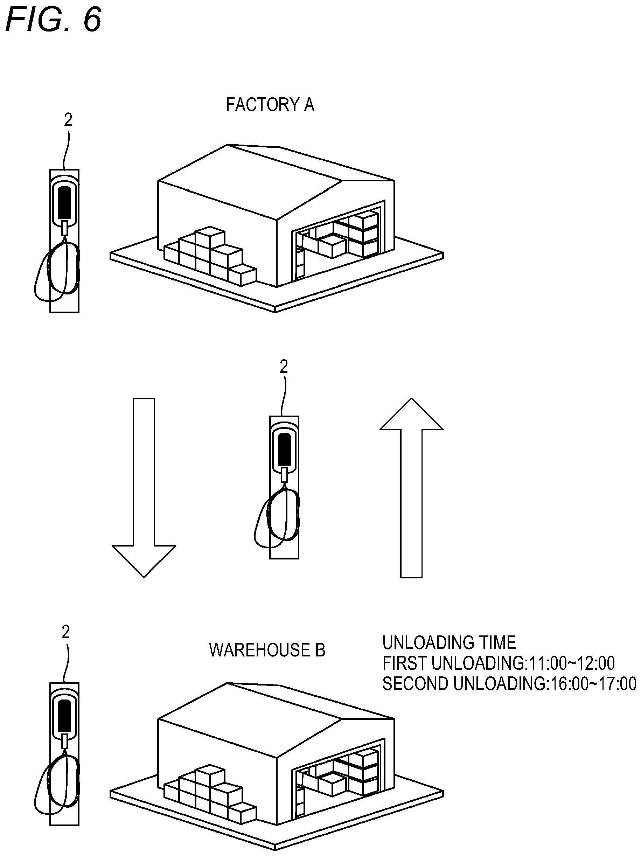

Now, a case where the operation plan as illustrated in Fig. 2 is input from the terminal 3 will be described. When the remaining battery level information is equal to or less than a specified value, the server 4 reserves the charging device 2 installed in the next work place within a work time at the next work place. For example, when the remaining battery level information is equal to or less than the specified value at the time of leaving a garage, as illustrated in Fig. 6, the server 4 reserves the charging device 2 installed in a factory A, which is the next work place, for the work time at the factory A (loading time of first loading: 9: 00 to 10: 00). If the designated charging device 2 is available in the designated time period based on the reservation information of the charging device 2 stored in the DB 42, the server 4 confirms the reservation and updates the reservation information to "reserved".

In addition, when the remaining battery level information is equal to or less than the specified value during driving of the electric vehicle 7 (for example, in the middle of returning to the factory A again after moving from the factory A to a warehouse B), the server 4 determines whether the electric vehicle 7 can travel to the factory A that is the next work place. More specifically, based on the acquired electricity consumption information, charging record information, position information, weather information, and road information, the server 4 determines whether the travel to the factory A can be performed. When it is determined that the travel can be performed, the server 4 confirms whether the charging device 2 installed in the factory A, which is the next work place, can be reserved in a period from 14: 00 to 15: 00, which is the next work time. If the reservation can be made, the server 4 confirms the reservation and updates the reservation information to "reserved".

On the other hand, when it is determined that the vehicle cannot travel to the factory A, or when the charging device 2 installed in the factory A cannot be reserved, the server 4 reserves the charging device 2 located on a travel route from the current position to the factory A. At this time, the server 4 reserves the charging device 2 for a time period in a period (12: 00 to 14: 00) from the work time (11: 00 to 12: 00) at the warehouse B to the work time (14: 00 to 15: 00) at the factory A, which is the next work place. When there is a rest time in the operation plan, the server 4 searches for the charging device 2 located on the travel route that can perform charging in the rest time (12: 00 to 13: 00), and reserves the searched charging device 2 for the rest time (12: 00 to 13: 00). When there is no rest time in the operation plan, the server 4 reserves the charging device 2 located on the travel route for a time period so as to be in time for the work at the next factory A.

In addition, when it is determined based on the position information that an arrival time at the factory A, which is the next work place, is earlier than the work time (starting from 14: 00) at the factory A during driving of the electric vehicle 7 (for example, in the middle of returning to the factory A again after moving from the factory A to the warehouse B), the server 4 may reserve the charging device 2 located on the travel route to the factory A. The charging device 2 located on the travel route may be the charging device 2 installed at a site other than a berth in the factory A.

Next, when the charging device 2 is reserved, as illustrated in Fig. 5, the server 4 transmits an authentication key of the reserved charging device 2 to the in-vehicle device 5 (S15). The in-vehicle device 5 receives the authentication key (S21), and transmits the received authentication key to the communication terminal 6 by BT communication (S22). The authentication key can be transmitted from the communication terminal 6 to the charging device 2 by BT communication at a reservation start time. The authentication key disappears after a reservation end time. Accordingly, only during a period from the reservation start time to the reservation end time, the authentication key can be transmitted from the communication terminal 6 to the charging device 2 and charging can be performed with the charging device 2.

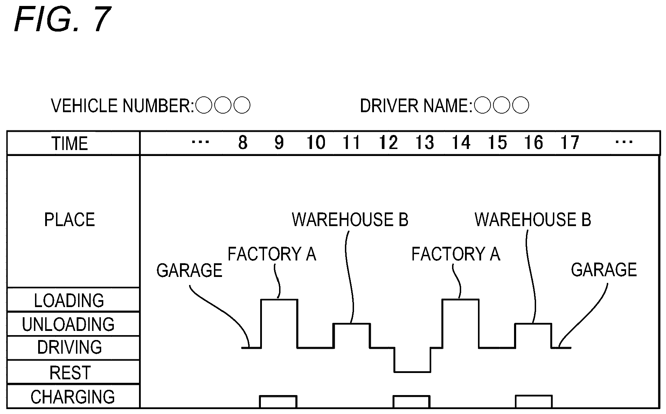

In addition, as illustrated in Fig. 7, the server 4 corrects the operation plan by adding the charging at the reserved charging device 2 to the operation plan (S16), transmits the corrected operation plan to the in-vehicle device 5 (S17), and then returns to S 12. The in-vehicle device 5 receives the corrected operation plan (S24). When the charging device 2 located on the travel route is reserved, the server 4 corrects the operation plan so that the driver can take a rest at the reserved time.

The in-vehicle device 5 displays the received operation plan on the display unit 55, or displays announcements such as "Please perform charging at loading in the next factory A according to the operation plan" or "Please perform charging with company-owned charging device after end of business" according to the operation plan.

According to the charging reservation system 1 described above, the server 4 makes the time period reservation of the charging device that is located at the work place set in the operation plan or on the travel route from the work place to the next work place, based on the management information. Accordingly, the driver can perform charging while operating according to the operation plan.

According to the charging reservation system 1 described above, the server 4 reserves the charging device 2 located at the work place within the work time at the work place, or reserves the charging device 2 located on the travel route for a time period in a period from the work time at the work place to the work time at the next work place. Accordingly, the driver can operate in accordance with the operation plan with higher accuracy.

In addition, according to the charging reservation system 1 described above, the server 4 adds charging at the reserved charging device 2 to the operation plan. Accordingly, the driver can perform charging in accordance with the operation plan.

In addition, according to the charging reservation system 1 described above, the server 4 reserves the charging device for a time period corresponding to any one of the road information and the weather information. Accordingly, the driver can operate in accordance with the operation plan with higher accuracy.

In addition, according to the charging reservation system 1 described above, the server 4 reserves the charging device based on the remaining battery level. Accordingly, charging can be performed before a battery residual is exhausted.

In addition, according to the charging reservation system 1 described above, when it is determined based on the position information of the electric vehicle 7 that the arrival time at the next work place is earlier than the work time at the next work place, the server 4 makes the time period reservation of the charging device 2 located on the travel route to the next work place. Accordingly, a waiting time before heading to the next work place can be allocated as a charging time.

The present invention is not limited to the embodiment described above, and modifications, improvements, and the like can be made as appropriate. In addition, the material, shape, size, number, arrangement position, and the like of each component in the above-described embodiment are set freely and are not limited as long as the present invention can be achieved.

According to the above-described embodiment, the server 4 reserves the charging device 2 installed in the next work place when the remaining battery level is decreased, and the present invention is not limited thereto. The server 4 may reserve the charging devices 2 installed in all the work places indicated in the operation plan within the work times regardless of the remaining battery level.

In addition, according to the above-described embodiment, the reservation management and the reservation of the charging device 2 are performed by one server 4, and the present invention is not limited thereto. A server that performs reservation management and a server that performs reservation may be separately provided.

In addition, according to the above-described embodiment, the server 4 acquires the operation plan by receiving the operation plan from the terminal 3, and the present invention is not limited thereto. For example, the server 4 may receive, from the terminal 3, information on the quantity of cargoes, the loading place, the unloading place, the loading time, and the unloading time that are told by the client, and create and acquire the operation plan based on the received information.

In addition, according to the above-described embodiment, the in-vehicle device 5 communicates with the server 4 via the Internet communication network 8 and receives the operation plan, the authentication key, and the like, and the present invention is not limited thereto. Any one or both of the in-vehicle device 5 and the communication terminal 6 may communicate with the server 4 via the Internet communication network 6 to receive the operation plan, the authentication key, and the like. In addition, a device other than the in-vehicle device 5 and the communication terminal 6 may communicate with the server 4 via the Internet communication network 6.

In addition, the server 4 may function as an availability calculation unit and calculate an availability of the charging device 2 based on the management information including the reservation information of the charging device 2 described above. The server 4 functions as a presentation unit and transmits the calculated availability to, for example, the terminal 3 of the transportation company. Accordingly, it is possible to propose, from the transportation company to an owner of the charging device 2 (that is, a client), installation of a new charging device at or around a base of the charging device 2 based on the availability. The owner of the charging device 2 can also conduct a discussion about the charging device in accordance with actual demands. In addition, the server 4 may directly transmit the availability to a terminal (not illustrated) of the owner of the charging device 2.

Here, features of the embodiment of the charging reservation system according to the present invention described above will be briefly summarized and listed in the following [1] to [7].
[1] A charging reservation system including:
   an operation plan acquisition unit (4) that acquires an operation plan indicating a work place and a work time of a driver who drives an electric vehicle (7);
   a charging device management unit (4) that manages management information including a location of a charging device (2) for the electric vehicle (7) and a reservation status of the charging device (2); and
   a reservation unit (4) that makes a time period reservation of the charging device (2) that is located at the work place set in the operation plan or on a travel route from the work place to a next work place, based on the management information.
   [2] The charging reservation system (1) according to [1], in which
      the reservation unit (4) reserves the charging device (2) located at the work place within the work time at the work place, or reserves the charging device (2) located on the travel route for a time period in a period from the work time at the work place to the work time at the next work place.
   [3] The charging reservation system (1) according to [1] or [2], further including:
      an operation plan correction unit (4) that adds charging at the charging device (2) reserved by the reservation unit (4) to the operation plan.
   [4] The charging reservation system (1) according to any one of [1] to [3], further including:
      an information acquisition unit (4) that acquires any one of road information and weather information, in which
      the reservation unit (4) reserves the charging device (2) based on information acquired by the information acquisition unit (4).
   [5] The charging reservation system (1) according to any one of [1] to [4], further including:
      a remaining battery level acquisition unit (4) that acquires a remaining battery level of the electric vehicle (7), in which
      the reservation unit (4) reserves the charging device (2) based on the remaining battery level.
   [6] The charging reservation system (1) according to any one of [1] to [5], further including:
      a position acquisition unit (4) that acquires position information of the electric vehicle (7), in which
      the reservation unit (4) makes a reservation of the charging device (2) located on the travel route to the next work place when it is determined based on the position information of the electric vehicle (7) that an arrival time at the next work place is earlier than the work time at the next work place.
   [7] The charging reservation system (1) according to any one of [1] to [6], including:
      an availability calculation unit (4) that calculates an availability of the charging device (2) based on the management information managed by the charging device management unit (4); and
      a presentation unit (4) that presents the availability calculated by the availability calculation unit (4).

The present application is based on Japanese Patent Application No. 2020-178201 filed on October 23, 2020, and the contents thereof are incorporated herein as reference.

### INDUSTRIAL APPLICABILITY

According to the present invention, it is possible to provide a charging reservation system with which a commercial vehicle can be charged while operating according to an operation plan. The present invention exhibiting this effect is useful for a charging reservation system.

### REFERENCE SIGNS LIST

1 charging reservation system
2 charging device
4 server (operation plan acquisition unit, charging device management unit, reservation unit, operation plan correction unit, information acquisition unit, remaining battery level acquisition unit, position acquisition unit, availability calculation unit, presentation unit)
7 electric vehicle

## Claims

1. A charging reservation system comprising:
an operation plan acquisition unit that acquires an operation plan indicating a work place and a work time of a driver who drives an electric vehicle;
a charging device management unit that manages management information including a location of a charging device for the electric vehicle and a reservation status of the charging device; and
a reservation unit that makes a time period reservation of the charging device that is located at the work place set in the operation plan or on a travel route from the work place to a next work place, based on the management information.

2. The charging reservation system according to claim 1, wherein
the reservation unit reserves the charging device located at the work place within the work time at the work place, or reserves the charging device located on the travel route for a time period in a period from the work time at the work place to the work time at the next work place.

3. The charging reservation system according to claim 1 or 2, comprising:
an operation plan correction unit that adds charging at the charging device reserved by the reservation unit to the operation plan.

4. The charging reservation system according to any one of claims 1 to 3, further comprising:
an information acquisition unit that acquires any one of road information and weather information, wherein
the reservation unit reserves the charging device based on information acquired by the information acquisition unit.

5. The charging reservation system according to any one of claims 1 to 4, further comprising:
a remaining battery level acquisition unit that acquires a remaining battery level of the electric vehicle, wherein
the reservation unit reserves the charging device based on the remaining battery level.

6. The charging reservation system according to any one of claims 1 to 5, further comprising:
a position acquisition unit that acquires position information of the electric vehicle, wherein
the reservation unit makes a time period reservation of the charging device located on the travel route to the next work place when it is determined based on the position information of the electric vehicle that an arrival time at the next work place is earlier than the work time at the next work place.

7. The charging reservation system according to any one of claims 1 to 6, comprising:
an availability calculation unit that calculates an availability of the charging device based on the management information managed by the charging device management unit; and
a presentation unit that presents the availability calculated by the availability calculation unit.
